# EUROPÄISCHE PATENTANMELDUNG

(11) **EP 3 466 265 A1**
(43) Veröffentlichungstag der Anmeldung: **10.04.2019**
(21) Anmeldenummer: 18203117.9
(22) Anmeldetag: 28.04.2014
(51) Int. Cl.: A22B 7/00

(54) **HÄNGEFÖRDERER FÜR SCHLACHTTIERE**

(30) Priorität: 02.05.2013 DE 102013208050
(62) Teilanmeldung aus: 14729595.0
(71) Anmelder: Westfleisch SCE mit beschränkter Haftung, 48183 Münster (DE)
(72) Erfinder: LEDING, Christian, 48165 Münster (DE); PIER, Holger, 48143 Münster (DE)
(74) Vertreter: Linnemann, Winfried

(57) **Zusammenfassung**

Die Erfindung betrifft einen Hängeförderer (1) für Schlachttiere, mit Haken (3) zum Aufhängen der Schlachttiere und mit einem antreibbaren, endlosen Fördermittel (4) mit daran voneinander beabstandet angeordneten Mitnehmern (43) zum fördernden Mitnehmen der Haken (3).

Der Hängeförderer (1) gemäß Erfindung ist dadurch gekennzeichnet, dass das Fördermittel (4) ein Seil und zugleich das die Haken (3) unmittelbar tragende Element des Hängeförderers (1) ist, wobei die Haken (3) unmittelbar auf dem Seil als Fördermittel (4) aufliegen.

## Beschreibung

Die Erfindung betrifft einen Hängeförderer für Schlachttiere, mit Haken zum Aufhängen der Schlachttiere und mit einem antreibbaren, endlosen Fördermittel mit daran voneinander beabstandet angeordneten Mitnehmern zum fördernden Mitnehmen der Haken.

Hängeförderer der vorgenannten Art werden vielfach in Schlachthöfen und fleischverarbeitenden Betrieben eingesetzt, um geschlachtete und zu verarbeitende Tiere oder Tierteile hängend zu transportieren.

Bekannt ist ein derartiger Hängeförderer beispielsweise aus der DE 41 38 467 A1. Eine Tragbahn für die Haken ist dabei üblicherweise eine Rohrbahn, auf der die Haken gleitend verschiebbar sind. Als Förderer sind Ketten üblich, in die Mitnehmerwagen eingefügt sind, die an einer Laufschiene geführt sind und die Mitnehmer aufweisen, welche mit den Haken in diese mitnehmenden, fördernden Kontakt treten.

Das Dokument FR 2 746 777 A1 zeigt einen Hängeförderer, der eine Rollbahn aus zwei einander zugewandten L-Profilen, auf der Rollbahn mittels Rollen verfahrbare Wagen, eine über der Rollbahn verlaufende Gliederkette als Fördermittel und an der Gliederkette angeordnete, die Wagen schiebende Anschläge aufweist.

Das Dokument JP S57 131 612 A zeigt eine Art Paternoster-Förderer mit vertikal verlaufenden Fördermitteln in Form zweier parallel umlaufender endloser Seile. Die von dem Förderer geförderten Gegenstände sind rahmenartige Transportgestelle, die jeweils an ihrer Oberkante gelenkig, aber dauerhaft, mit Armen zweier einander gegenüberliegend an den Seilen angebrachter Klemmkörper verbunden sind. Somit hängen die Transportgestelle pendelnd an den Klemmkörpern und Seilen nach unten, auch wenn die Seile mit den daran hängenden Transportgestellen über die oberen und unteren Umlenkrollen laufen, wie insbesondere die Figuren 8 und 9 dieses Dokuments zeigen. Die Transportgestelle dieses Förderers sind im Betrieb nicht von den Seilen trennbar.

Als nachteilig wird bei den bekannten Hängeförderern angesehen, dass deren Förderketten schwer sind und entsprechend stabile Laufschienen sowie im Betrieb hohe Antriebskräfte erfordern. Zudem müssen die Förderketten zur Verminderung von Reibung und Verschleiß stets gut gefettet werden, wobei dennoch in der Praxis nur eine relativ kurze Einsatzzeit der Förderkette erreicht wird, bevor sie durch eine neue Kette ersetzt werden muss. Außerdem kommt es nachteilig vor, dass von der Förderkette herabtropfendes Schmierfett auf transportierte Tierkörper fällt und diese verunreinigt. Mit diesem letztgenannten Problem befasst sich zwar die erste vorgenannte Schrift zum Stand der Technik schon, jedoch ist die dort vorgeschlagene Lösung eine den Herstellungsaufwand und das Gewicht der Laufschiene noch erhöhende, nach unten geschlossene Rinne für die Förderkette und die Mitnehmerwagen.

Für die vorliegende Erfindung stellt sich daher die Aufgabe, einen Hängeförderer der eingangs genannten Art zu schaffen, welcher die angegebenen Nachteile vermeiden und der insbesondere einen verminderten konstruktiven Aufwand, einen geringeren Antriebskraftbedarf und weniger Wartungsaufwand erfordert sowie eine längere Haltbarkeit aufweist, also sowohl geringere Investitionskosten als auch niedrigere Betriebskosten verursacht.

Die Lösung der Aufgabe gelingt erfindungsgemäß mit einem Hängeförderer der eingangs genannten Art, der dadurch gekennzeichnet ist, dass das Fördermittel ein Seil und zugleich das die Haken unmittelbar tragende Element des Hängeförderers ist, wobei die Haken unmittelbar auf dem Seil als Fördermittel aufliegen.

Mit dieser Lösung wird eine wesentliche technische Vereinfachung des Hängeförderers erreicht, da hier die Tragbahn für die Haken entfällt. Dies reduziert den Teile- und Montageaufwand und somit die Investitionskosten ganz erheblich. Die Haken liegen hier unmittelbar auf dem Seil als Fördermittel auf, welches nun also zugleich als Tragmittel dient.

Zweckmäßig sind die Haken in ihrem mit dem Seil in Eingriff tretenden Bereich in geeigneter Weise an den Seilquerschnitt formangepasst, um ein zuverlässiges Zusammenwirken zu gewährleisten.

Damit der Hängeförderer den in der Praxis auftretenden Belastungen dauerhaft standhalten kann, ist bevorzugt vorgesehen, dass das das Fördermittel bildende Seil ein Stahlseil ist. Alternativ ist auch ein Seil aus Kohlenstofffasern oder aus Aramid einsetzbar, das noch wesentlich leichter, aber auch teurer als ein Stahlseil ist.

Um das Seil durch die daran angeordneten Mitnehmer nicht zu schädigen, aber gleichzeitig einen sicheren Halt der Mitnehmer am Seil zu gewährleisten, sind zweckmäßig die Mitnehmer an dem das Fördermittel bildenden Seil klemmend angebracht. Konkret kann dies beispielsweise durch Schraubklemmen oder Quetschhülsen realisiert sein.

Da im Betrieb des Hängeförderer das endlos umlaufende Seil als Fördermittel angetrieben werden muss und unter für die Lastaufnahme ausreichender Zugspannung gehalten werden muss, ist vorgesehen, dass das das Fördermittel bildende Seil über mindestens zwei Umlenkrollen und mindestens eine antreibbare Antriebsrolle und mindestens eine Spannrolle geführt ist.

Um den Aufwand an einzusetzenden Rollen gering zu halten, kann bei dem Hängeförderer wenigstens eine der Umlenkrollen zugleich eine/die Antriebsrolle sein.

Aus dem gleichen Grund kann wenigstens eine der Umlenkrollen zugleich eine/die Spannrolle sein.

Bevorzugt ist für den Hängeförderer weiter vorgesehen, dass die Rollen, über die das das Fördermittel bildende Seil geführt ist, horizontale Drehachsen aufweisen. Die Anordnung aus dem Seil als Fördermittel und den Rollen ist also in einer vertikalen oder zumindest im Wesentlichen vertikalen Ebene angeordnet. Somit kann ein Untertrum des Seil entlang des Förderabschnitts oder der Förderabschnitte des Hängeförderers verlaufen und dort mittels der Mitnehmer die Haken unmittelbar tragen und transportieren, während ein Obertrum des Seils nur zu dessen Rücklauf dient, ohne dass hier Haken getragen werden.

Eine weitere Ausgestaltung des Hängeförderers sieht schließlich vor, dass einem/ jedem Förderabschnitt des Hängeförderers am Förderabschnittsanfang ein Hakenaufgleiter und am Förderabschnittsende ein Hakenabgleiter zugeordnet ist. Hakenaufgleiter und Hakenabgleiter sind von konventionellen Hängeförderern an sich bekannt und können mit entsprechender technischer Anpassung auch an dem erfindungsgemäßen Hängeförderer eingesetzt werden. Hiermit werden am Förderstreckenanfang Haken von einem vorgeschalteten anderen Förderer auf den Hängeförderer überführt, beispielsweise über eine gleitend durchlaufene Gefällestrecke. Entsprechend können am Förderstreckenende die Haken vom Hängeförderer an einen nachgeschalteten anderen Förderer übergeben werden.

Technisch ist es auch denkbar, dass die verschiedenen Rollen, über die das Seil als Fördermittel geführt ist, vertikale Drehachsen aufweisen, wobei es dann möglich wird, dass die Haken über den gesamten Umlauf des Seils an diesem verbleiben können. Zur Lastaufnahme sind dann zusätzliche Rollen mit horizontaler Drehachse als Unterstützung für das Seil zweckmäßig, um ein Abspringen des Seils von den Rollen mit vertikaler Drehachse sicher zu vermeiden.

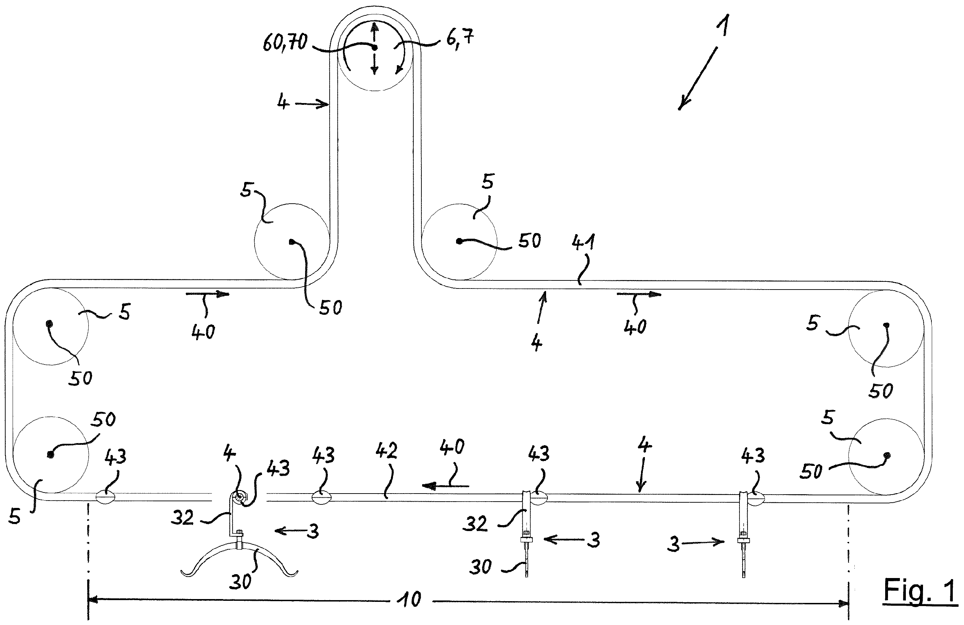

Ein Ausführungsbeispiel der Erfindung wird im Folgenden anhand einer Zeichnung erläutert. Die Zeichnung zeigt in
- Figur 1: einen Hängeförderer in einer Seitenansicht.

In Figur 1 ist ein Ausführungsbeispiel eines Hängeförderers 1 in einer schematischen Seitenansicht dargestellt. Bei diesem Hängeförderer 1 ist das Fördermittel 4 ein endlos umlaufendes Seil, das in Laufrichtung 40 antreibbar ist. Über mehrere Umlenkrollen 5 mit horizontalen Drehachsen 50 sowie eine Antriebsrolle 6, die zugleich eine Spannrolle 7 bildet, wird das das Fördermittel 4 bildende Seil geführt sowie angetrieben und gespannt.

Dabei ist das das Fördermittel 4 bildende Seil zugleich das die Haken 3 des Hängeförderers 1 tragende Element. Eine eigene Tragbahn ist nicht erforderlich.

An dem das Fördermittel 4 bildenden Seil sind in regelmäßigen Abständen Mitnehmer 43 angebracht, die hier in Form von Quetschhülsen ausgeführt sind. Diese Mitnehmer 43 haben eine solche Form und Größe, dass sie problemlos zusammen mit dem Fördermittel 4 über alle Rollen 5, 6, 7 laufen können.

Ein in Figur 1 unterer Bereich des Hängeförderers 1 bildet einen Förderabschnitt 10, über welchen mit dem Hängeförderer 1 Haken 3 gefördert werden können. An einem in Figur 1 rechts liegenden Förderabschnittsanfang ist zweckmäßig ein hier nicht dargestellter Hakenaufgleiter und am in Figur 1 links liegenden Förderabschnittsende ein ebenfalls nicht dargestellter Hakenabgleiter angeordnet. Hakenaufgleiter und Hakenabgleiter sind von konventionellen Hängeförderern an sich bekannt und können mit entsprechender technischer Anpassung auch hier eingesetzt werden. Hiermit werden am Förderstreckenanfang Haken 3 von einem vorgeschalteten anderen Förderer auf den Hängeförderer 1 überführt, beispielsweise über eine gleitend durchlaufene Gefällestrecke. Entsprechend können am Förderstreckenende die Haken 3 vom Hängeförderer 1 an einen nachgeschalteten anderen Förderer übergeben werden.

Durch die Bewegung des das Fördermittel 4 bildenden Seils in seiner Laufrichtung 40 gelangen die Mitnehmer 43 in fördernde Anlage an der Rückseite der Haken 3 und transportieren diese in Laufrichtung 40 entlang des Förderabschnitts 10. Durch die Spannrolle 7 wird das endlos umlaufende Fördermittel 4 unter einer so großen Spannung gehalten, dass es in der Lage ist, die Haken 3 und daran aufgehängte Schlachttiere zu tragen. Zur Gewährleistung der erforderlichen Tragfähigkeit ist das das Fördermittel 4 bildende Seil vorzugsweise ein Stahlseil.

Im Bereich des Obertrums 41 des Fördermittels 4 werden keine Haken 3 transportiert. Hier sind ein Teil der Umlenkrollen 5 mit ihren horizontalen Drehachsen 50 sowie die Antriebsrolle 6 für das Fördermittel 4 zu dessen Bewegung in Laufrichtung 40 angeordnet, wobei die Antriebsrolle 6 zugleich die Spannrolle 7 ist. Dabei hat auch die Antriebs- und Spannrolle 6, 7 eine horizontale Drehachse 60, 70. Die Funktionen von Antriebsrolle 6 und Spannrolle 7 können selbstverständlich auch von zwei verschiedenen Rollen übernommen werden.

Die Haken 3 weisen jeweils Tragbügel 32 auf, die an die Querschnittsform des das Fördermittel 4 bildenden Seils 40 angepasst sind. Mit dem unteren Ende jedes Tragbügels 32 ist eine Spreize 30 verbunden, die um eine vertikale Achse relativ zu dem Tragbügel 32 verdrehbar sein kann. An der Spreize 30 des Hakens 3 kann ein Schlachttier aufgehängt werden.

Anstelle der Spreize 30 kann an dem Tragbügel 32 auch ein anderes, für den jeweiligen Einsatzzweck des Hängeförderers 1 geeignetes Element angebracht sein.

**Bezugszeichenliste:**

| Zeichen | Bezeichnung |
|---|---|
| 1 | Hängeförderer |
| 10 | Förderabschnitt |
| | |
| 3 | Haken |
| 30 | Spreize |
| 32 | Tragbügel |
| | |
| 4 | Fördermittel (Seil) |
| 40 | Laufrichtung |
| 41 | Obertrum |
| 42 | Untertrum |
| 43 | Mitnehmer |
| | |
| 5 | Umlenkrollen |
| 50 | Drehachse |
| | |
| 6 | Antriebsrolle |
| 60 | Drehachse |
| | |
| 7 | Spannrolle |
| 70 | Drehachse |

## Patentansprüche

1. Hängeförderer (1) für Schlachttiere, mit Haken (3) zum Aufhängen der Schlachttiere und mit einem antreibbaren, endlosen Fördermittel (4) mit daran voneinander beabstandet angeordneten Mitnehmern (43) zum fördernden Mitnehmen der Haken (3),
**dadurch gekennzeichnet,**
**dass** das Fördermittel (4) ein Seil und zugleich das die Haken (3) unmittelbar tragende Element des Hängeförderers (1) ist, wobei die Haken (3) unmittelbar auf dem Seil als Fördermittel (4) aufliegen.

2. Hängeförderer nach Anspruch 1, **dadurch gekennzeichnet, dass** das das Fördermittel (4) bildende Seil ein Stahlseil ist.

3. Hängeförderer nach Anspruch 1 oder 2, **dadurch gekennzeichnet, dass** die Mitnehmer (43) an dem das Fördermittel (4) bildenden Seil klemmend angebracht sind.

4. Hängeförderer nach einem der Ansprüche 1 bis 3, **dadurch gekennzeichnet, dass** das das Fördermittel (4) bildende Seil über mindestens zwei Umlenkrollen (5) und mindestens eine antreibbare Antriebsrolle (6) und mindestens eine Spannrolle (7) geführt ist.

5. Hängeförderer nach Anspruch 4, **dadurch gekennzeichnet, dass** wenigstens eine der Umlenkrollen (5) zugleich eine/die Antriebsrolle (6) ist.

6. Hängeförderer nach Anspruch 4 oder 5, **dadurch gekennzeichnet, dass** wenigstens eine der Umlenkrollen (5) zugleich eine/die Spannrolle (7) ist.

7. Hängeförderer nach einem der Ansprüche 1 bis 6, **dadurch gekennzeichnet, dass** die Rollen (5, 6, 7), über die das das Fördermittel (4) bildende Seil geführt ist, horizontale Drehachsen (50, 60, 70) aufweisen.

8. Hängeförderer nach einem der Ansprüche 1 bis 7, **dadurch gekennzeichnet, dass** einem/jedem Förderabschnitt (10) des Hängeförderers (1) am Förderabschnittsanfang ein Hakenaufgleiter und am Förderabschnittsende ein Hakenabgleiter zugeordnet ist.
